# EUROPEAN PATENT SPECIFICATION

(11) **EP 4 735 799 B1**
(45) Date of publication and mention of the grant of the patent: **18.11.2026**
(21) Application number: 24745516.5
(22) Date of filing: 26.06.2024
(51) Int. Cl.: F24D 13/02, B63B 3/48, B63J 2/12, H05B 3/26

(54) **A HEATING PANEL FOR THE FLOOR OF A SHIP**
HEIZPLATTE FÜR DEN BODEN EINES SCHIFFES
PANNEAU CHAUFFANT POUR PLANCHER D'UN NAVIRE

(30) Priority: 27.06.2023 IT 202300013239
(43) Date of publication of application: 06.05.2026
(73) Proprietor: I.R.C.A. S.p.a. Industria Resistenze Corazzate e Affini, 31029 Vittorio Veneto (IT)
(72) Inventor: FRASCHETTI, Stefano, 8071 Bertrange (LU); PIZZINAT, Giuseppe, 31015 Conegliano (IT); POSER, Ivan, 31012 Cappella Maggiore (IT); TAURIAN, Andrea, 33080 Porcia (IT); ZOPPAS, Federico, 31100 Treviso (IT)
(74) Representative: de Alteriis, Renato
(86) International application number: PCT/IB2024/056198
(87) International publication number: WO 2025/003897

(56) References cited:
- WO-A1-2021/091394
- GB-A- 342 684
- KR-B1- 101 074 720
- KR-B1- 101 484 691
- US-A- 5 023 428
- US-B2- 10 378 778

## Description

### Field of the invention

The present invention relates to the field of heating systems for ships, in particular to the field of underfloor heating systems.

### Background art

Ships, such as cruise ships, are often provided with underfloor heating systems.

To date, the creation of an underfloor heating system involves pouring the material onto the sheet metal of the ship. Once the layer of material has solidified, heating cables are placed thereon. Another layer of material is then created onto which tiles or other elements are fixed, adapted to define the walkable surface of the floor of a ship.

Disadvantageously, this implementation process takes a long time.

Disadvantageously, heating cables are exposed to risks of breakage. In fact, workers may step onto the heating cables onto which work tools may also accidentally fall. Therefore, the heating cables may break or operate unreliably.

Disadvantageously, in case of faults, the heating cables are difficult to access. In particular, to repair or replace a heating cable it is necessary to break the floor, for example with a jackhammer.

Disadvantageously, a heating system created as described above may provide heat in an uneven manner, and therefore with a thermal performance which is not optimal, since the construction process is particularly subject to human error and therefore requires highly specialized workers.

Disadvantageously, to date, the floor with a heating system of a ship is particularly heavy, and it therefore significantly affects the consumption of a ship.

The need is therefore felt to improve the underfloor heating systems of ships, overcoming the limits of the prior art.

Documents US10378778B2, WO2021091394A1, KR101074720B1, GB342684A, US5023428A, KR101484691B1 represent background art.

### Summary of the invention

It is an object of the present invention to make a heating panel for the floor of a ship which allows the floor to be heated efficiently and reliably, which may be assembled in a quick manner and without the risk of damage.

It is a particular object of the present invention to make the aforesaid panel so that it is particularly light.

It is a particular object of the present invention to allow maintenance operations on the heating system to be carried out easily.

The present invention achieves at least one of such objects and other objects which will be apparent in the light of the present description, by means of a heating panel for the floor of a ship according to claim 1, comprising
- a metal base;
- a metal cover;
- a polymeric support, placed between the base and the cover;
- a heating element, adapted to generate heat when it is electrically powered, arranged between the polymeric support and the cover;

wherein the base and the cover form a hermetically sealed casing, in particular hermetically sealed by means of sealing material;
wherein said polymeric support and said heating element are arranged in said hermetically sealed casing;
wherein the base is provided with a peripheral side wall which extends transversely from a flat portion of the base;
the heating panel comprising at least one temperature probe, or at least one tube adapted to accommodate a temperature probe, which crosses a respective opening of said peripheral side wall; said respective opening being completely obstructed, in particular partly by the respective temperature probe or the respective tube and partly by sealing material, preferably a glue.

The invention also relates to a ship according to claim 15.

Advantageously, a heating panel according to the invention allows the temperature of the heating panel to be monitored by means of said at least one temperature probe, or it is designed to accommodate a temperature probe (so that heating may take place efficiently and reliably), and it also meets the safety requirements related to ships, in particular, the smoke safety requirement.

Furthermore, the temperature probe can be easily replaced, in particular in the case where it is arranged in said tube.

In order to provide an optimal temperature detection, it is particularly preferable that said at least one temperature probe or said at least one tube are in contact with the cover, which in particular is adapted to define an upper surface of the heating panel.

It is particularly preferable that said casing is hermetically sealed by means of sealing material, preferably by means of a glue. One of the advantages associated with this feature is the possibility to use a preformed polymeric support, so that the sealing can be done after having arranged the polymeric support between the base and the cover. Sealing by welding, on the other hand, would not allow sealing after having placed the polymeric support between the base and the cover, because of the temperatures reached during welding. Furthermore, sealing by means of glue may be achieved in a particularly quick, reliable and easy manner, and allows for maintenance work to be performed.

The use of a polymeric support is particularly advantageous, since it allows to obtain a light panel capable of providing heat efficiently since heat losses are minimized.

The heating element is preferably a heating cable. Alternatively, the heating element may be, for example, a heating sheet. With respect to the heating sheet, the heating cable is more reliable and has a better performance.

Advantageously, the arrangement of the heating element, between the polymeric support and the cover, allows the floor heating to be optimized, minimizing downward heat dispersion.

Preferably, to further reduce heat dispersion, the heating element is partially arranged in the polymeric support.

The polymeric support is preferably made of a polymer foam, preferably a PET foam, to achieve a particularly lightweight panel.

The fact that the heating panel may be particularly light is important because it allows the overall weight of the ship to be reduced, and therefore it makes it possible to reduce the consumption thereof.

It is particularly important that the base and the cover form a hermetically sealed casing, since, in this manner, the heating panel meets the safety requirements related to ships, in particular smoke safety requirements.

In particular, the hermetically sealed casing, or in other words a hermetically sealed panel, allows the use inside it of a support made of a polymeric material on board a ship. In particular, advantageously, the hermetically sealed casing prevents the escape of smoke which may be generated in the event of accidental combustion of the polymeric support.

Advantageously, the heating panel is assembled in the factory, and therefore the heating element is not exposed to risks of breakage due, for example, to workers trampling or falling work tools.

Advantageously, the heating panels according to the invention may be installed aboard a ship quickly, without the need for highly skilled workers. Advantageously, for example, tiles or other elements adapted to define the walkable surface of the floor of a ship may be glued directly to the panel, preferably on the outer surface of the cover.

Advantageously, the heating panels according to the invention may heat a room in a more uniform manner with respect to the systems according to the prior art, in particular since the positioning of the heating element is substantially not subject to human error.

Advantageously, the heating panels according to the invention allow maintenance operations to be performed in an easier manner. In fact, for example, a panel may be easily replaced and/or a temperature probe may be easily replaced.

Further features and advantages of the invention will become more apparent in light of the detailed description of exemplary but not exclusive embodiments.

The dependent claims describe particular embodiments of the invention.

### Brief description of the Figures

The description of the invention refers to the accompanying drawings, which are provided by way of non-limiting example, in which:
Figure 1 shows an exploded perspective view of a panel according to the invention;
Figure 2 shows a perspective view of a component of the panel of Figure 1;

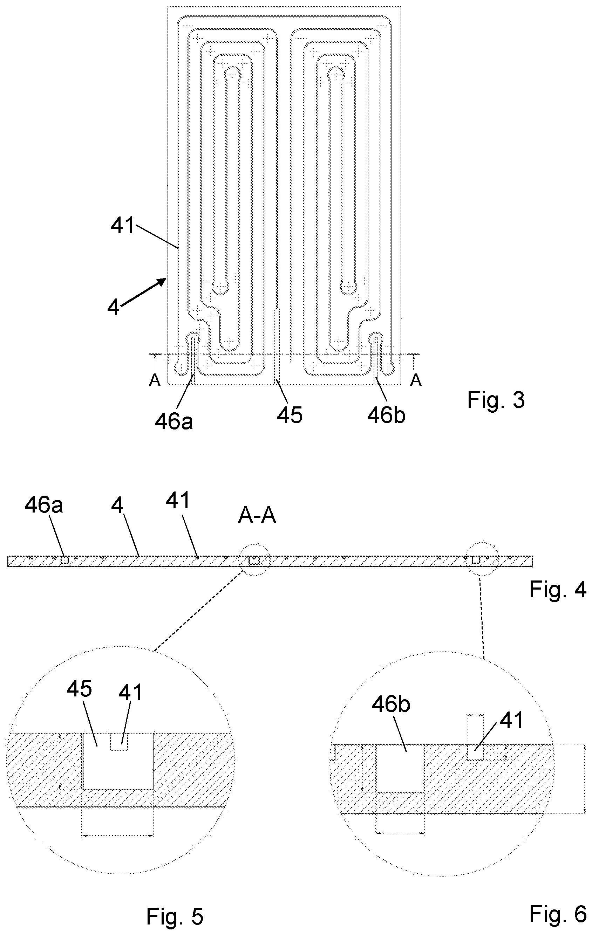

Figure 3 shows a plan view of a component of the panel of Figure 1;
Figure 4 shows section A-A of Figure 3;
Figure 5 shows an enlarged detail of Figure 4;
Figure 6 shows another enlarged detail of Figure 4;

The same elements or components have the same reference numerals.

### Description of exemplary embodiments of the invention

With reference to the Figures, exemplary embodiments of a heating panel 1 for the floor of a ship are described.

The heating panel 1 is particularly adapted to heat a room, such as, for example, a restroom or a cabin of a ship, in particular a cruise ship.

In all the embodiments, the heating panel 1 comprises
- a metal base 3, or metal slab or plate;
- a metal cover 2, or metal slab or plate;
- a polymeric support 4 (or polymeric slab or polymeric sheet), arranged between the base 3 and the cover 2;
- a heating element 5 (or heating component), adapted to generate heat when it is electrically powered, arranged between the polymeric support 4 and the cover 2;

the base 3 and the cover 2 form a hermetically sealed casing 10, in particular hermetically sealed by means of sealing material;
said polymeric support 4 and said heating element 5 are arranged in said hermetically sealed casing 10;
the base 3 is provided with a peripheral side wall 31 which extends transversely from a flat portion 30 of the base 3;
the heating panel 1 comprising at least one temperature probe (or sensor) 6a, 6b, or at least one tube (preferably made of metal) adapted to accommodate a temperature probe, which crosses a respective opening 36a, 36b (also called "respective first opening" for descriptive purposes) of said peripheral side wall 31; said respective opening 36a, 36b being completely obstructed, in particular partly by the respective temperature probe 6a, 6b or by the respective tube, and partly by sealing material (preferably a glue), whereby said respective opening 36a, 36b is hermetically sealed.

Therefore, advantageously, the heating panel 1 is hermetically sealed, or in other words is sealed tightly so as to prevent the passage of fluids, e.g., fumes. In particular, the fumes produced by a possible combustion of the polymeric support would not escape from the heating panel 1.

In particular, the polymeric support 4 is arranged completely inside said casing.

Said at least one temperature probe 6a, 6b or said at least one tube are, in particular, at least in part, preferably partially, inside said casing. Preferably, said at least one temperature probe 6a, 6b or said at least one tube are arranged between the polymeric support 4 and the cover 2.

The base 3 and the cover 2 are, in particular, fixed to each other by means of sealing material, preferably glue. Glue is preferably present between the peripheral wall 31 and the cover 2.

The base 3 defines one of the two faces, or main surfaces, of the heating panel 1, and the cover 2 defines the other of the two faces, or main surfaces, of the heating panel 1.

In particular, when the heating panel 1 is installed, the cover 2 preferably defines the upper (or alternatively lower) surface, which in particular is flat, of the heating panel 1; and the base 3 preferably defines the lower (or alternatively upper) surface, which in particular is flat, of the heating panel 1.

The base 3 and the cover 2, in particular, are the outermost components of the panel 1. In particular, the outer surface of the base 3 and the outer surface of the cover 2 are the outermost surfaces of the panel 1.

The base 3, as already mentioned, is provided with a peripheral side wall 31. The peripheral wall 31, in particular, extends substantially along the entire perimeter of the panel 1. In particular, the peripheral side wall 31 substantially defines the side surface of a rectangular parallelepiped.

In particular, the base 3 preferably comprises or is formed by a flat portion 30 from which said peripheral side wall 31 extends transversely, preferably orthogonally. Preferably, the cover 2 is a flat plate or slab, or, in other words, the cover 2 preferably consists of a flat plate or slab.

Furthermore, or alternatively, the cover may be provided with a peripheral side wall. In particular, the cover may comprise or may be formed by a flat portion from which the peripheral side wall extends transversely, preferably orthogonally. In this case, preferably, the base is a flat plate or slab, or in other words the base consists of a flat plate or slab.

The base 3 and the cover 2 are parallel or substantially parallel to each other. In particular, the cover 2 is parallel or substantially parallel to the flat portion 30 of the base 3.

The peripheral side wall 31 is fixed, in particular by means of sealing material, to the cover 2.

Preferably, the base 3 and the cover 2 are made of aluminum or aluminum alloy. Although aluminum or an aluminum alloy is particularly preferable, the base 3 and the cover 2 may be made of other metal, e.g., steel.

The cover 2 is preferably made from a plate or foil which preferably has a thickness from 0.5 to 5 mm, e.g., from 0.5 to 3 mm; and/or the base 3 is made from a slab which preferably has a thickness from 0.5 to 5 mm, e.g., from 0.5 to 3 mm.

In particular, the aforesaid peripheral side wall 31 of the base 3 is preferably formed by folding, in particular with respect to the flat portion 30, of the plate with which the base 3 is made, or in other words the peripheral side wall 31 is formed by folding, in particular with respect to the flat portion 30, the peripheral portion of the plate. In other words, it is particularly preferable that said peripheral side wall 31 forms a single piece, in particular monolithic, with said flat portion 30. In particular, the peripheral side wall 31 comprises or is formed by four portions 31a, 31b, 31c, 31d, of which a first portion 31a and a third portion 31c are substantially parallel to each other, and a second portion 31b and a fourth portion 31d are substantially orthogonal to the first portion 31a and the third portion 31c. Preferably, the panel 1 is substantially shaped like a parallelepiped. In particular, the base 3 and the cover 2 preferably have a substantially rectangular cross-section.

Preferably, the base 3, in particular the peripheral side wall 31, is provided with one or more openings, for example notches, for the passage of the heating element 5 and/or a power cable of the heating element 5, and of any other components, in particular so that they may come out from the casing 10. All possible openings or notches in the casing are in any case completely obstructed, in particular with sealing material, preferably a glue.

Preferably, the peripheral side wall 31 is provided with an opening 35 (also called second opening for descriptive purposes) crossed by the heating element 5 and/or by a power cable of the heating element, for example, so that at least one stretch 51 of heating element 5 comes out of said casing 10.

The opening 35 is completely obstructed, in particular partly by the heating element 5 and/or by said power cable, and partly by sealing material.

Optionally, a stretch of heating element 5 and/or power cable which passes through the opening 35 is inserted into a tube 52 (or tubular body). In the case where the aforesaid tube 52 is provided, it also partly obstructs the aforesaid opening 35. The stretch 51 of heating element 5 which is outside the casing 10 is preferably provided with a connector for connecting to an electrical power supply source.

Depending on the arrangement and/or type of heating element 5, the number of openings may vary. For example, two openings 35 may be provided, each crossed by the heating element 5 and/or by a power cable of the heating element as described above.

Advantageously, the heating panel 1 comprises at least one temperature probe 6a, 6b (preferably inserted into a respective tube), or at least one tube adapted to accommodate a respective temperature probe, which crosses a respective opening 36a, 36b of said peripheral side wall 31; said respective opening 36a, 36b being completely obstructed, in particular partly by the respective temperature probe 6a, 6b and/or by the respective tube, and partly by sealing material, preferably a glue.

Preferably, said at least one temperature probe 6a, 6b or said at least one tube is in contact with the cover 2.

As already mentioned, it may also be provided that a respective temperature probe is arranged in each tube.

In the example shown, two temperature probes 6a, 6b, or alternatively two tubes, are provided, which cross a respective opening 36a, 36b. The elements shown with references 6a, 6b may also be representative of two tubes, each adapted to accommodate a respective temperature probe, for example in which a respective temperature probe is arranged.

Preferably, the heating element 5 faces, in particular directly, the cover 2.

The heating element 5 is preferably in contact, in particular directly in contact, with the polymeric support 4.

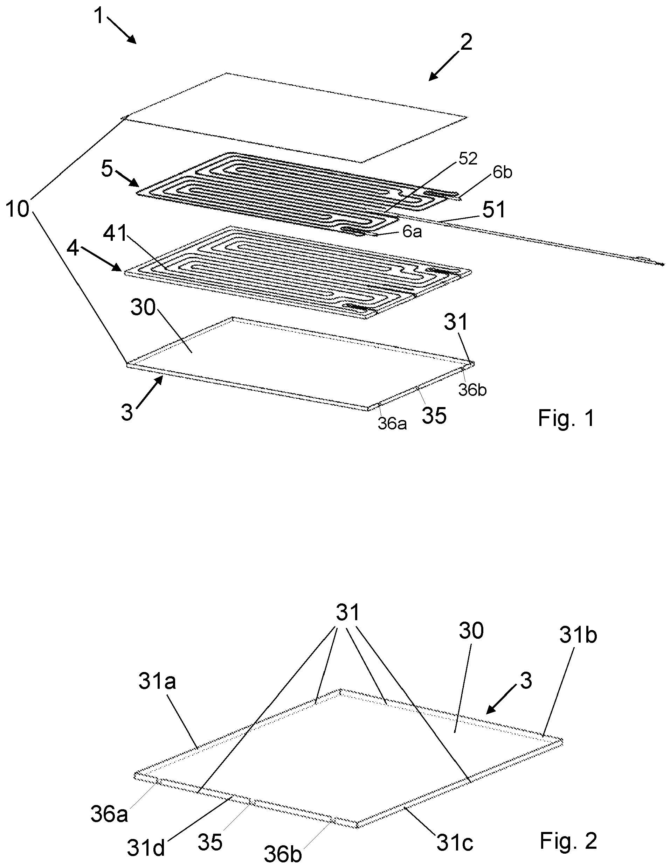

The heating element 5 is preferably a heating cable 5 (as in the non-limiting example shown in Figure 1). Alternatively, the heating element may be, for example, a heating sheet, in particular of the etched foil type; the heating sheet, for example, comprises a metal foil, which in particular forms an electrically conductive track adapted to generate heat, fixed onto one or two polymeric sheets, for example made of silicone.

The heating cable 5, in particular, is provided with an external electrically insulating sheath, in which one or more electrical conductive elements are arranged.

Preferably, the heating cable 5 is arranged on a plane so as to form a path which, for example, comprises curved stretches and straight stretches.

Preferably, the heating element 5, for example the heating cable 5, is partially arranged or inserted into the polymeric support 4.

For example, the polymeric support 4 may optionally be provided with a groove 41 or seat, and the heating element 5, for example the heating cable 5, is arranged in said groove 41 or seat.

In case the aforesaid tube 52 is provided, a groove 45 is preferably provided where the tube 52 is arranged, the groove 45 preferably having a depth which is greater with respect to the depth of the groove 41. The groove 41 or seat preferably has a depth which is greater than or equal to the thickness of the heating element 5, for example greater than or equal to the external diameter of the heating cable 5.

Another way to obtain that the heating cable 5, or more generally the heating element 5, is partially arranged in the polymeric support 4, involves injecting material so that it solidifies in contact with the heating element 5, although this method for manufacturing the polymeric support is less advantageous with respect to the use of a preformed polymeric support 4.

In all the embodiments, more than one heating element 5 may be provided, for example two heating elements 5 may be provided.

Optionally, said one or more temperature probes 6a, 6b (or the aforesaid one or more tubes), may be partly arranged in the insulating support 4. For example, the polymeric support 4 may be provided with a groove 46a, 46b for each temperature probe 6a, 6b or for each tube adapted to accommodate a respective temperature probe.

The polymeric support 4 may also not be provided with the groove for the heating element 5 or grooves for the possible temperature probes 6a, 6b or possible tubes.

It is particularly preferable that the polymeric support 4 is a preformed component, in particular, which is produced before the base 3 and the cover 2 are assembled to each other to form the hermetically sealed casing.

The polymeric support 4, in particular, is electrically and thermally insulating.

The polymeric support 4, preferably, is substantially a polymeric sheet.

The polymeric support 4 preferably has a thickness of from 5 to 100 mm, for example from 5 to 50 mm.

The polymeric support 4 is preferably made of a polymer foam, preferably PET (polyethylene terephthalate) foam. The polymeric support 4 may alternatively be made of other polymer materials. By way of non-limiting example only, the polymeric support 4 may be made of any of the following materials, preferably in the form of polymer foam: PVC (polyvinyl chloride), EPDM (Ethylene-Propylene Diene Monomer), EVA (Ethylene Vinyl Acetate), EPS (sintered expanded polystyrene), PE (polyethylene), PC (polycarbonate), ABS (acrylonitrile-butadiene-styrene), Phenols.

The polymeric support 4 is preferably in contact, in particular directly in contact, with the base 3 and/or the cover 2.

In all the embodiments, the sealing material with which the heating panel 1 is provided is preferably a glue, preferably a polyurethane glue, in particular a two-component polyurethane glue.

The heating panel 1, in particular, substantially forms a *sandwich* structure.

The heating panels 1 may advantageously be arranged on the same surface, side by side with each other. Tiles or other elements suitable for defining the walkable surface of the floor of a ship may for example be fixed onto the heating panels 1.

The invention further relates to a ship provided with a plurality of heating panels 1, in particular arranged side by side on the same surface.

A particularly preferred method for producing a heating panel 1 comprising the steps of:
a) arranging a polymeric support 4, in particular a preformed polymeric support, onto the base 3;
b) arranging said heating element 5 on the polymeric support 4;
c) arranging said at least one temperature probe 6a, 6b or said at least one tube on the polymeric support 4, in particular so that said at least one temperature probe 6a, 6b, or said at least one tube, crosses a respective opening 36a, 36b of the peripheral wall 31 of the base 3;
d) hermetically sealing the base 3 and the cover 2 to each other and obstructing said at least one opening 36a, 36b (in particular by means of sealing material, preferably a glue), in particular so as to define said hermetically sealed casing, in particular so that the heating panel 1 is hermetically sealed.

Optionally, to make the floor of a ship, panels may also be provided, in particular non-heating panels, substantially equal to the heating panels 1, but without a heating element, without possible temperature probes or possible tubes adapted to accommodate temperature probes and without the need for any grooves in the polymeric support adapted to accommodate components. In particular, optionally, to make the floor of a ship, both the heating panels 1 and one or more panels may be used, each of which has the following features:
- a metal base, preferably made of aluminum or aluminum alloy (equal or substantially equal to the metal base 3);
- a metal cover preferably made of aluminum or aluminum alloy (equal or substantially equal to the cover 2);
- a polymeric sheet or support (preferably made of polymeric foam, for example PET foam), arranged between the base and the cover;

wherein the base and the cover form a hermetically sealed casing, in particular hermetically sealed by means of sealing material, preferably a glue; and
wherein said polymeric support is arranged in said hermetically sealed casing.

Therefore, a system may be implemented for creating the floor of a ship comprising a plurality of heating panels 1 and optionally a plurality of said non-heating panels.

## Claims

1. A heating panel (1) for the floor of a ship comprising
- a metal base (3);
- a metal cover (2);
- a polymeric support (4), arranged between the base (3) and the cover (2);
- a heating element (5), adapted to generate heat when it is electrically powered, arranged between the polymeric support (4) and the cover (2);
wherein the base (3) and the cover (2) form a hermetically sealed casing (10), in particular hermetically sealed by means of sealing material;
wherein said polymeric support (4) and said heating element (5) are arranged in said hermetically sealed casing (10):
wherein the base (3) is provided with a peripheral side wall (31) which extends transversely from a flat portion (30) of the base (3);
**characterized in that** the heating panel (1) comprises at least one temperature probe (6a, 6b), or at least one tube adapted to accommodate a temperature probe, which crosses a respective first opening (36a, 36b) of said peripheral side wall (31); said respective first opening (36a, 36b) being completely obstructed, partly by the respective temperature probe (6a, 6b) or respective tube and partly by sealing material.

2. A heating panel (1) according to claim 1, wherein said casing (10) is hermetically sealed by means of sealing material.

3. A heating panel (1) according to claim 1 or 2, wherein said peripheral side wall (31) is fixed by means of sealing material, preferably glue, to the cover (2); preferably wherein the peripheral side wall (31) forms one piece with said flat portion (30) and/or wherein glue is present between the peripheral side wall (31) and the cover (2).

4. A heating panel (1) according to any one of the preceding claims, wherein said peripheral side wall (31) is provided with a second opening (35) crossed by the heating element (5) and/or by a power supply cable of the heating element (5); wherein said second opening (35) is completely obstructed, in particular partly by sealing material and partly by the heating element (5) and/or by said power supply cable.

5. A heating panel (1) according to any one of the preceding claims, wherein said sealing material is a glue.

6. A heating panel (1) according to any one of the preceding claims, wherein the heating element (5) is in contact with the cover (2).

7. A heating panel (1) according to any one of the preceding claims, wherein said at least one temperature probe (6a, 6b) or said at least one tube is in contact with the cover (2).

8. A heating panel (1) according to any one of the preceding claims, wherein said at least one temperature probe (6a, 6b) or said at least one tube is arranged between the polymeric support (4) and the cover (2); preferably wherein said at least one temperature probe (6a, 6b) or said at least one tube is partially arranged in the insulating support (4), in particular wherein said polymeric support (4) is provided with a groove (46a, 46b) or seat and said at least one temperature probe (6a, 6b) or said at least one tube is arranged in said groove (46a, 46b) or seat.

9. A heating panel (1) according to any one of the preceding claims, wherein the base (3) and the cover (2) are made of aluminum or aluminum alloy; and/or wherein said polymeric support (4) is made of a polymer foam, preferably of PET foam.

10. A heating panel (1) according to any one of the preceding claims, wherein said polymeric support (4) is a preformed component.

11. A heating panel (1) according to any one of the preceding claims, wherein said polymeric support (4) is in contact, in particular directly in contact, with the base (3) and/or the cover (2).

12. A heating panel (1) according to any one of the preceding claims, wherein said heating element (5) is a heating cable; preferably wherein said heating cable (5) is partially arranged in the polymeric support (4); in particular, wherein said polymeric support (4) is provided with a groove (41) or seat, and wherein the heating cable (5) is arranged in said groove (41) or seat.

13. A heating panel according to any one of claims 1 to 11, wherein said heating element is a heating sheet, in particular of the etched foil type.

14. A heating panel according to any one of the preceding claims, comprising at least one tube adapted to accommodate a respective temperature probe; wherein said at least one tube crosses a respective first opening (36a, 36b) of said peripheral side wall (31); said respective first opening (36a, 36b) being completely obstructed, in particular partly by the respective tube and partly by sealing material; wherein a temperature probe is arranged in said at least one tube.

15. A ship provided with a plurality of heating panels (1) according to any one of claims 1 to 14.

## Patentansprüche

1. Heizplatte (1) für den Boden eines Schiffes, umfassend
- eine Metallbasis (3);
- eine Metallabdeckung (2);
- eine polymere Halterung (4), die zwischen der Basis (3) und der Abdeckung (2) angeordnet ist;
- ein Heizelement (5), das dazu ausgelegt ist, Wärme zu erzeugen, wenn es elektrisch versorgt wird, und das zwischen der polymeren Halterung (4) und der Abdeckung (2) angeordnet ist;
wobei die Basis (3) und die Abdeckung (2) ein hermetisch abgedichtetes Gehäuse (10) bilden, insbesondere mittels Dichtungsmaterial hermetisch abgedichtet;
wobei die polymere Halterung (4) und das Heizelement (5) in dem hermetisch abgedichteten Gehäuse (10) angeordnet sind;
wobei die Basis (3) mit einer Umfangsseitenwand (31) versehen ist, die sich quer von einem flachen Abschnitt (30) der Basis (3) erstreckt;
**dadurch gekennzeichnet, dass** die Heizplatte (1) mindestens einen Temperaturfühler (6a, 6b) oder mindestens ein Rohr umfasst, das dazu ausgelegt ist, einen Temperaturfühler aufzunehmen, welches eine jeweilige erste Öffnung (36a, 36b) der Umfangsseitenwand (31) durchquert; wobei die jeweilige erste Öffnung (36a, 36b) vollständig verschlossen ist, teilweise durch den jeweiligen Temperaturfühler (6a, 6b) oder das jeweilige Rohr und teilweise durch Dichtungsmaterial.

2. Heizplatte (1) nach Anspruch 1, wobei das Gehäuse (10) mittels Dichtungsmaterial hermetisch abgedichtet ist.

3. Heizplatte (1) nach Anspruch 1 oder 2, wobei die Umfangsseitenwand (31) mittels Dichtungsmaterial, vorzugsweise Klebstoff, an der Abdeckung (2) befestigt ist; vorzugsweise wobei die Umfangsseitenwand (31) ein Stück mit dem flachen Abschnitt (30) bildet und/oder wobei Klebstoff zwischen der Umfangsseitenwand (31) und der Abdeckung (2) vorhanden ist.

4. Heizplatte (1) nach einem der vorhergehenden Ansprüche, wobei die Umfangsseitenwand (31) mit einer zweiten Öffnung (35) versehen ist, die von dem Heizelement (5) und/oder von einem Stromversorgungskabel des Heizelements (5) durchquert wird; wobei die zweite Öffnung (35) vollständig verschlossen ist, insbesondere teilweise durch Dichtungsmaterial und teilweise durch das Heizelement (5) und/oder durch das Stromversorgungskabel.

5. Heizplatte (1) nach einem der vorhergehenden Ansprüche, wobei das Dichtungsmaterial ein Klebstoff ist.

6. Heizplatte (1) nach einem der vorhergehenden Ansprüche, wobei das Heizelement (5) mit der Abdeckung (2) in Kontakt steht.

7. Heizplatte (1) nach einem der vorhergehenden Ansprüche, wobei der mindestens eine Temperaturfühler (6a, 6b) oder das mindestens eine Rohr mit der Abdeckung (2) in Kontakt steht.

8. Heizplatte (1) nach einem der vorhergehenden Ansprüche, wobei der mindestens eine Temperaturfühler (6a, 6b) oder das mindestens eine Rohr zwischen der polymeren Halterung (4) und der Abdeckung (2) angeordnet ist; vorzugsweise wobei der mindestens eine Temperaturfühler (6a, 6b) oder das mindestens eine Rohr teilweise in der isolierenden Halterung (4) angeordnet ist, insbesondere wobei die polymere Halterung (4) mit einer Nut (46a, 46b) oder einem Sitz versehen ist und der mindestens eine Temperaturfühler (6a, 6b) oder das mindestens eine Rohr in der Nut (46a, 46b) oder dem Sitz angeordnet ist.

9. Heizplatte (1) nach einem der vorhergehenden Ansprüche, wobei die Basis (3) und die Abdeckung (2) aus Aluminium oder einer Aluminiumlegierung bestehen; und/oder wobei die polymere Halterung (4) aus einem Polymerschaum, vorzugsweise aus PET-Schaum, besteht.

10. Heizplatte (1) nach einem der vorhergehenden Ansprüche, wobei die polymere Halterung (4) eine vorgeformte Komponente ist.

11. Heizplatte (1) nach einem der vorhergehenden Ansprüche, wobei die polymere Halterung (4) mit der Basis (3) und/oder der Abdeckung (2) in Kontakt, insbesondere in direktem Kontakt, steht.

12. Heizplatte (1) nach einem der vorhergehenden Ansprüche, wobei das Heizelement (5) ein Heizkabel ist; vorzugsweise wobei das Heizkabel (5) teilweise in der polymeren Halterung (4) angeordnet ist; insbesondere wobei die polymere Halterung (4) mit einer Nut (41) oder einem Sitz versehen ist und wobei das Heizkabel (5) in der Nut (41) oder dem Sitz angeordnet ist.

13. Heizplatte nach einem der Ansprüche 1 bis 11, wobei das Heizelement eine Heizfolie ist, insbesondere vom Typ der geätzten Folie.

14. Heizplatte nach einem der vorhergehenden Ansprüche, umfassend mindestens ein Rohr, das dazu ausgelegt ist, einen jeweiligen Temperaturfühler aufzunehmen; wobei das mindestens eine Rohr eine jeweilige erste Öffnung (36a, 36b) der Umfangsseitenwand (31) durchquert; wobei die jeweilige erste Öffnung (36a, 36b) vollständig verschlossen ist, insbesondere teilweise durch das jeweilige Rohr und teilweise durch Dichtungsmaterial; wobei ein Temperaturfühler in dem mindestens einen Rohr angeordnet ist.

15. Schiff, das mit einer Vielzahl von Heizplatten (1) nach einem der Ansprüche 1 bis 14 versehen ist.

## Revendications

1. Panneau chauffant (1) pour le plancher d'un navire, comprenant
- une base métallique (3) ;
- un couvercle métallique (2) ;
- un support polymère (4), disposé entre la base (3) et le couvercle (2) ;
- un élément chauffant (5), apte à générer de la chaleur lorsqu'il est alimenté électriquement, disposé entre le support polymère (4) et le couvercle (2) ; dans lequel la base (3) et le couvercle (2) forment un boîtier hermétiquement scellé (10), en particulier hermétiquement scellé au moyen d'un matériau d'étanchéité ;
dans lequel ledit support polymère (4) et ledit élément chauffant (5) sont disposés dans ledit boîtier hermétiquement scellé (10) ;
dans lequel la base (3) est pourvue d'une paroi latérale périphérique (31) qui s'étend transversalement depuis une partie plane (30) de la base (3) ;
**caractérisé en ce que** le panneau chauffant (1) comprend au moins une sonde de température (6a, 6b), ou au moins un tube apte à loger une sonde de température, qui traverse une première ouverture (36a, 36b) respective de ladite paroi latérale périphérique (31) ; ladite première ouverture (36a, 36b) respective étant complètement obstruée, en partie par la sonde de température (6a, 6b) respective ou le tube respectif et en partie par du matériau d'étanchéité.

2. Panneau chauffant (1) selon la revendication 1, dans lequel ledit boîtier (10) est hermétiquement scellé au moyen d'un matériau d'étanchéité.

3. Panneau chauffant (1) selon la revendication 1 ou 2, dans lequel ladite paroi latérale périphérique (31) est fixée au moyen d'un matériau d'étanchéité, de préférence de la colle, au couvercle (2) ; de préférence dans lequel la paroi latérale périphérique (31) forme une seule pièce avec ladite partie plane (30) et/ou dans lequel de la colle est présente entre la paroi latérale périphérique (31) et le couvercle (2).

4. Panneau chauffant (1) selon l'une quelconque des revendications précédentes, dans lequel ladite paroi latérale périphérique (31) est pourvue d'une deuxième ouverture (35) traversée par l'élément chauffant (5) et/ou par un câble d'alimentation électrique de l'élément chauffant (5) ; dans lequel ladite deuxième ouverture (35) est complètement obstruée, en particulier en partie par du matériau d'étanchéité et en partie par l'élément chauffant (5) et/ou par ledit câble d'alimentation électrique.

5. Panneau chauffant (1) selon l'une quelconque des revendications précédentes, dans lequel ledit matériau d'étanchéité est une colle.

6. Panneau chauffant (1) selon l'une quelconque des revendications précédentes, dans lequel l'élément chauffant (5) est en contact avec le couvercle (2).

7. Panneau chauffant (1) selon l'une quelconque des revendications précédentes, dans lequel ladite au moins une sonde de température (6a, 6b) ou ledit au moins un tube est en contact avec le couvercle (2).

8. Panneau chauffant (1) selon l'une quelconque des revendications précédentes, dans lequel ladite au moins une sonde de température (6a, 6b) ou ledit au moins un tube est disposé entre le support polymère (4) et le couvercle (2) ; de préférence dans lequel ladite au moins une sonde de température (6a, 6b) ou ledit au moins un tube est partiellement disposé dans le support isolant (4), en particulier dans lequel ledit support polymère (4) est pourvu d'une rainure (46a, 46b) ou d'un logement et ladite au moins une sonde de température (6a, 6b) ou ledit au moins un tube est disposé dans ladite rainure (46a, 46b) ou ledit logement.

9. Panneau chauffant (1) selon l'une quelconque des revendications précédentes, dans lequel la base (3) et le couvercle (2) sont en aluminium ou en alliage d'aluminium ; et/ou dans lequel ledit support polymère (4) est en mousse polymère, de préférence en mousse de PET.

10. Panneau chauffant (1) selon l'une quelconque des revendications précédentes, dans lequel ledit support polymère (4) est un composant préformé.

11. Panneau chauffant (1) selon l'une quelconque des revendications précédentes, dans lequel ledit support polymère (4) est en contact, en particulier directement en contact, avec la base (3) et/ou le couvercle (2).

12. Panneau chauffant (1) selon l'une quelconque des revendications précédentes, dans lequel ledit élément chauffant (5) est un câble chauffant ; de préférence dans lequel ledit câble chauffant (5) est partiellement disposé dans le support polymère (4) ; en particulier, dans lequel ledit support polymère (4) est pourvu d'une rainure (41) ou d'un logement, et dans lequel le câble chauffant (5) est disposé dans ladite rainure (41) ou ledit logement.

13. Panneau chauffant selon l'une quelconque des revendications 1 à 11, dans lequel ledit élément chauffant est une feuille chauffante, en particulier du type feuille gravée.

14. Panneau chauffant selon l'une quelconque des revendications précédentes, comprenant au moins un tube apte à loger une sonde de température respective ; dans lequel ledit au moins un tube traverse une première ouverture (36a, 36b) respective de ladite paroi latérale périphérique (31) ; ladite première ouverture (36a, 36b) respective étant complètement obstruée, en particulier en partie par le tube respectif et en partie par du matériau d'étanchéité ; dans lequel une sonde de température est disposée dans ledit au moins un tube.

15. Navire équipé d'une pluralité de panneaux chauffants (1) selon l'une quelconque des revendications 1 à 14.
